# EUROPEAN PATENT APPLICATION

(11) **EP 4 830 957 A1**
(43) Date of publication of application: **28.10.2026**
(21) Application number: 26169758.5
(22) Date of filing: 31.03.2026
(51) Int. Cl.: B60J 10/75, B60J 10/24

(54) **BELT MOLDING**

(30) Priority: 18.04.2025 JP 2025069077; 12.02.2026 JP 2026020876
(71) Applicant: AISIN CORPORATION, Kariya, Aichi 448-8650 (JP)
(72) Inventor: YOKOTA, Kazuyoshi, Kariya, 448-8650 (JP); FUKUI, Katsuhisa, Kariya, 448-8650 (JP); AMEMIYA, Yohei, Kariya, 448-8650 (JP)
(74) Representative: TBK

(57) **Abstract**

It is intended to reduce the number of steps in a manufacturing process of a belt molding. A belt molding (20, 120, 220) to be mounted to a flange portion (18) of a door panel (10) includes a belt molding main body (21) including an upper wall portion (22) covering the flange portion (18) from an upper side, a vehicle inner side wall portion (23) extending downward from a vehicle inner side end portion of the upper wall portion (22), and a vehicle outer side wall portion (25) extending downward from a vehicle outer side end portion of the upper wall portion (22), and an elastically contacting portion (40, 140, 240) being integrally connected to a lower end of the vehicle outer side wall portion (25), being molded into a continuous hollow shape, and elastically contacting the door panel (10).

## Description

### TECHNICAL FIELD

This disclosure generally relates to a belt molding.

### BACKGROUND DISCUSSION

Conventionally, a belt molding (waist molding) including a belt molding main body and a cushioning lip has been proposed (see, for example, Reference 1 (JP2012-158246A)). Herein, the belt molding main body includes an upper wall portion covering a flange portion of a door panel from an upper side, a vehicle inner side wall portion extending downward from a vehicle inner side end portion of the upper wall portion, and a vehicle outer side wall portion extending downward from a vehicle outer side end portion of the upper wall portion. The cushioning lip protrudes from a lower end of the vehicle outer side wall portion of the belt molding main body in such a way as to elastically contact an outer panel of the door panel. This cushioning lip includes a seal lip portion protruding from the lower end of the vehicle outer side wall portion of the belt molding main body in such a way as to elastically contact the door panel when the belt molding is mounted, and a retaining lip portion extending from a distal end of the seal lip portion in such a way as to be retained by a folded portion formed at the lower end of the vehicle outer side wall portion. In a state where the retaining lip portion is retained by the folded portion, a hollow space is formed between the folded portion, the seal lip portion, and the retaining lip portion.

In the belt molding described above, after the cushioning lip including the seal lip portion and the retaining lip portion is molded, the cushioning lip is deformed in such a way that the retaining lip portion is retained by the folded portion, thereby forming the hollow space. Therefore, when a user touches the belt molding attached to the door of the vehicle and force to lift the belt molding is applied, the retaining lip portion may fall off from the folded portion. Further, in order for the retaining lip portion of the cushioning lip to be retained by the folded portion, a space for deforming and curling the cushioning lip inward is required, which may cause an increase in size of the belt molding in a vehicle width direction. Furthermore, the number of steps in a manufacturing process of the belt molding increases.

A need thus exists for a belt molding that can be downsized.

### SUMMARY

A belt molding according to this disclosure adopts the following means to achieve the above-described main object.

The belt molding to be mounted to a flange portion of a door panel includes:
a belt molding main body including an upper wall portion covering the flange portion from an upper side, a vehicle inner side wall portion extending downward from a vehicle inner side end portion of the upper wall portion, and a vehicle outer side wall portion extending downward from a vehicle outer side end portion of the upper wall portion; and
an elastically contacting portion being integrally connected to a lower end of the vehicle outer side wall portion, being molded into a continuous hollow shape, and elastically contacting the door panel.

The belt molding according to this disclosure includes the belt molding main body including the upper wall portion covering the flange portion from the upper side, the vehicle inner side wall portion extending downward from the vehicle inner side end portion of the upper wall portion, and the vehicle outer side wall portion extending downward from the vehicle outer side end portion of the upper wall portion, and the elastically contacting portion being integrally connected to the lower end of the vehicle outer side wall portion, being molded into a continuous hollow shape, and elastically contacting the door panel. By providing the elastically contacting portion molded into the hollow shape, the belt molding can be downsized as compared to one in which the hollow space is formed by deforming and curling the cushioning lip inward after molding as described above.

### BRIEF DESCRIPTION OF THE DRAWINGS

The foregoing and additional features and characteristics of this disclosure will become more apparent from the following detailed description considered with the reference to the accompanying drawings, wherein:
FIG. 1 is a cross-sectional view illustrating a cross section of a belt molding according to an embodiment;
FIG. 2 is a cross-sectional view illustrating a cross section of a belt molding according to a modified example; and
FIG. 3 is a cross-sectional view illustrating a cross section of the belt molding according to the modified example.

### DETAILED DESCRIPTION

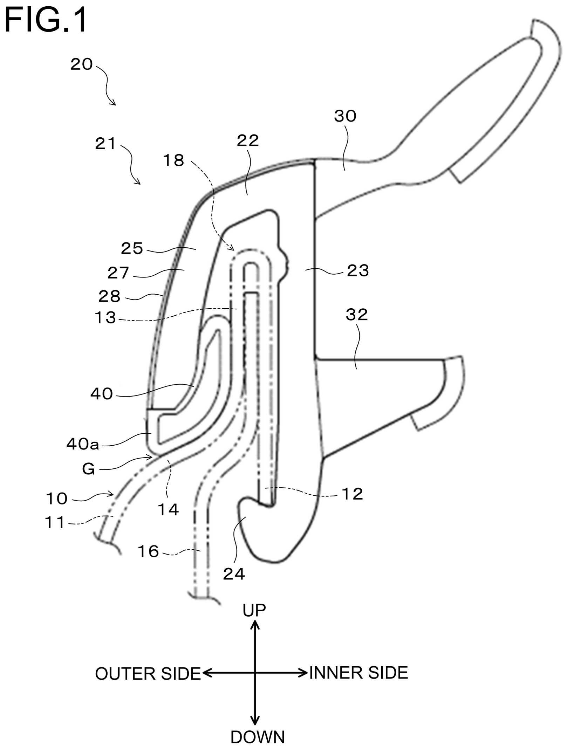

Modes for carrying out this disclosure will be described with reference to the drawings. FIG. 1 is a cross-sectional view illustrating a cross section of a belt molding 20 of an embodiment. As illustrated in the drawing, the belt molding 20 extends along a vehicle front-rear direction (a direction penetrating the paper surface), and is mounted to a flange portion 18 of a door panel 10. The belt molding 20 has a belt molding main body 21, touch lips 30, 32, and an elastically contacting portion 40. Herein, the door panel 10 includes an outer panel 11 and an inner panel 16. The outer panel 11 and the inner panel 16 are stacked, the outer panel 11 is further folded back to sandwich the inner panel 16 and overlaid on the inner panel 16, and they are joined together, whereby the flange portion 18 extending in an up-down direction is formed. In addition, a lower end of a distal end portion (on the vehicle inner side of the inner panel 16) of a folded portion (uppermost portion) of the outer panel 11 becomes an engagement portion 12 engaged with an engagement portion 24 of the belt molding main body 21. A proximal end portion (on the vehicle outer side of the inner panel 16) of the folded portion of the outer panel 11 has a flange constituting portion 13 extending in the up-down direction, and an inclined portion 14 extending downward toward the vehicle outer side from a lower end of the flange constituting portion 13. The inclined portion 14 extends further to the vehicle outer side than the belt molding main body 21.

The belt molding main body 21 has an inverted U-shape having an opening on a lower side and an internal space in a transverse cross section (the cross section illustrated in FIG. 1), and has an upper wall portion 22 covering the flange portion 18 from an upper side, a vehicle inner side wall portion 23 extending downward from a vehicle inner side end portion (the right end portion in FIG. 1) of the upper wall portion 22, and a vehicle outer side wall portion 25 extending downward from a vehicle outer side end portion (the left end portion in FIG. 1) of the upper wall portion 22. The vehicle inner side wall portion 23 extends further downward than the vehicle outer side wall portion 25. The engagement portion 24 protruding to the vehicle outer side is formed at a lower end of the vehicle inner side wall portion 23. The engagement portion 24 is engaged with the engagement portion 12 of the outer panel 11 (the flange portion 18) when the belt molding 20 is mounted to the flange portion 18.

The belt molding main body 21 is constituted by a base portion 27 extending over the entire areas of the upper wall portion 22, the vehicle inner side wall portion 23, and the vehicle outer side wall portion 25, and a covering portion 28 covering the base portion 27 over the entire outer surfaces of the upper wall portion 22 and the vehicle outer side wall portion 25. The base portion 27 is formed of, for example, a hard resin material such as polypropylene (PP) or stainless steel (SUS: Steel Use Stainless). The covering portion 28 is formed of, for example, a hard resin material such as hard olefinic thermoplastic elastomer (hard TPO: Thermoplastic Olefinic Elastomer).

The touch lips 30, 32 are formed of, for example, an elastic material such as a soft resin or rubber. The touch lips 30, 32 respectively extend from an upper end and a center portion in the up-down direction of the vehicle inner side wall portion 23 of the belt molding main body 21 toward the vehicle inner side (the right side in FIG. 1) in such a way as to contact a door glass (not illustrated).

The elastically contacting portion 40 is formed of, for example, an elastic material such as a soft resin or rubber. The elastically contacting portion 40 has a hollow shape, specifically, a shape having a single hollow space (internal space). The elastically contacting portion 40 is connected to (integrated with) the lower end of the vehicle outer side wall portion 25, and extends from a lower side to the vehicle inner side with respect to the vehicle outer side wall portion 25. When the belt molding 20 is mounted to the flange portion 18, the elastically contacting portion 40 elastically contacts the door panel 10 (the inclined portion 14 and the flange constituting portion 13 of the outer panel 11) in the up-down direction and in a vehicle width direction. Due to the elastic contact between the elastically contacting portion 40 and the flange constituting portion 13, mutually facing surfaces of the outer panel 11 and the vehicle inner side wall portion 23 contact each other. The orientation of the belt molding 20 relative to the door panel 10 is retained by the engagement between the engagement portion 12 of the outer panel 11 and the engagement portion 24 of the belt molding main body 21, the elastic contact between the elastically contacting portion 40 and the outer panel 11, and the contact between the mutually facing surfaces of the outer panel 11 and the vehicle inner side wall portion 23. Further, in a state where the belt molding 20 is mounted to the flange portion 18, a wall portion 40a on the vehicle outer side of the elastically contacting portion 40 extends along the up-down direction.

The belt molding 20 of the embodiment is manufactured as an integrated object by co-extruding a plurality of types of materials (co-extruded materials) respectively constituting the base portion 27, the covering portion 28, the touch lips 30, 32, and the elastically contacting portion 40, for example.

In manufacturing a belt molding like the one in the above-mentioned JP2012-158246A, after molding a lip-shaped elastically contacting portion, it is necessary to deform the lip-shaped elastically contacting portion to be retained by a retained portion of the belt molding main body to form a hollow space. Therefore, in order for the elastically contacting portion to be retained by the retained portion, a space for deforming and curling the elastically contacting portion inward is required, which may cause an increase in size of the belt molding in the vehicle width direction. In addition, when a vehicle user touches the belt molding attached to the door of the vehicle and a force to lift the belt molding is applied, the retaining lip portion may fall off from the folded portion. Furthermore, the number of steps in the manufacturing process of the belt molding increases.

In contrast, in the embodiment, the belt molding 20 has the elastically contacting portion 40 integrally connected to the lower end of the vehicle outer side wall portion 25 and molded into a continuous hollow shape. This allows the belt molding 20 to be downsized. Further, by providing the belt molding 20 with the hollow-shaped elastically contacting portion 40, the durability (resistance to settling) of the elastically contacting portion 40 can be improved as compared to one in which the elastically contacting portion has a lip shape, and a period for maintaining the orientational stability of the belt molding 20 with respect to the door panel 10 can be extended. For example, durability of the elastically contacting portion 40 can be improved when a user touches the belt molding attached to the vehicle door and a force that lifts the belt molding is applied. Furthermore, since the belt molding 20 is manufactured as an integrated object by molding the base portion 27, the covering portion 28, the touch lips 30, 32, and the elastically contacting portion 40 by co-extrusion of a plurality of types of materials, the number of steps in the manufacturing process of the belt molding 20 can be reduced. In addition, since the belt molding 20 has the hollow-shaped elastically contacting portion 40, an appearance of the belt molding 20 from the vehicle outer side can be improved as compared to one in which the elastically contacting portion has a lip shape and its distal end portion (lower end portion) faces the vehicle outer side and elastically contacts the door panel 10, that is, one whose distal end portion is visible from the vehicle outer side.

Further, in the embodiment, when the belt molding 20 is mounted to the flange portion 18, the wall portion 40a on the vehicle outer side of the elastically contacting portion 40 extends along the up-down direction. As a result, a gap G between the lower end portion on the vehicle outer side of the wall portion 40a and the door panel 10 can be prevented from becoming relatively large, as compared to one in which the wall portion 40a of the elastically contacting portion 40 has a curved shape toward the vehicle inner side from the upper end side to the lower end side, or one in which the elastically contacting portion has a lip shape and its distal end portion (lower end portion) faces the vehicle inner side and elastically contacts the door panel 10. Consequently, generation of airflow vortices caused by the gap G can be reduced, so that deterioration of steering stability (traveling stability) of the vehicle can be prevented.

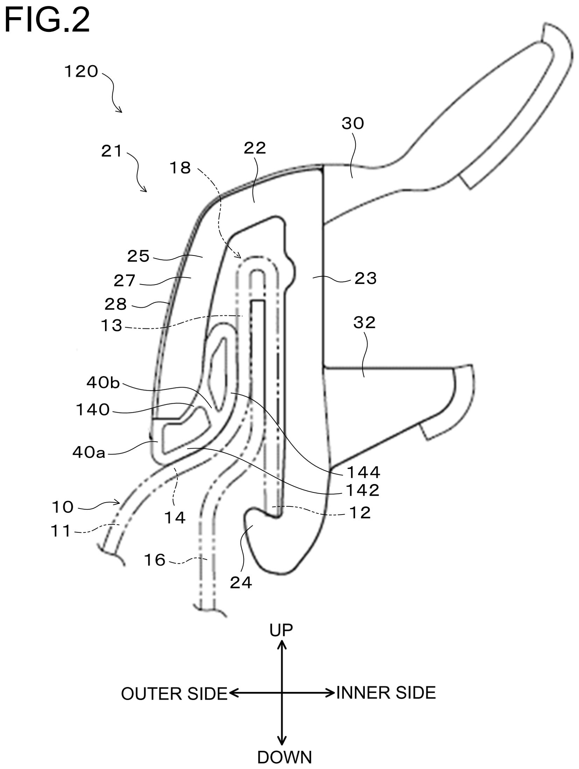

In the embodiment described above, the elastically contacting portion 40 of the belt molding 20 is described as having a single hollow space (internal space), but is not limited thereto. For example, a configuration as illustrated in a modified belt molding 120 of FIG. 2 may be adopted. An elastically contacting portion 140 of the belt molding 120 has a shape in which the hollow space of the elastically contacting portion 40 of the belt molding 20 is partitioned into two by a partition portion 40b. In this case, the elastically contacting portion 140 is connected to the lower end of the vehicle outer side wall portion 25, and can be considered to have a first elastically contacting portion 142 and a second elastically contacting portion 144. The first elastically contacting portion 142 is positioned below the vehicle outer side wall portion 25, has a shape with a single hollow space, and elastically contacts the door panel 10 (inclined portion 14 of the outer panel 11) in the up-down direction. The second elastically contacting portion 144 is connected to the first elastically contacting portion 142, is positioned on the vehicle inner side (right side in FIG. 2) with respect to the vehicle outer side wall portion 25, has a shape with a single hollow space, and elastically contacts the door panel 10 (flange constituting portion 13 of the outer panel 11) in the vehicle width direction. Since the hollow space of the elastically contacting portion 40 of the belt molding 20 is larger than that of the elastically contacting portion 140 of the belt molding 120, it is easier to manufacture the belt molding 20 by extrusion molding.

In the belt molding 120, the first elastically contacting portion 142 and the second elastically contacting portion 144 of the elastically contacting portion 140 are connected to each other, but they may be individually connected to the vehicle outer side wall portion 25 and do not have to be directly connected to each other.

In the belt molding 120, the elastically contacting portion 140 has the first elastically contacting portion 142 having a shape with a single hollow space and the second elastically contacting portion 144 having a shape with a single hollow space, but at least one of the first elastically contacting portion 142 and the second elastically contacting portion 144 may have a shape with a plurality of hollow spaces.

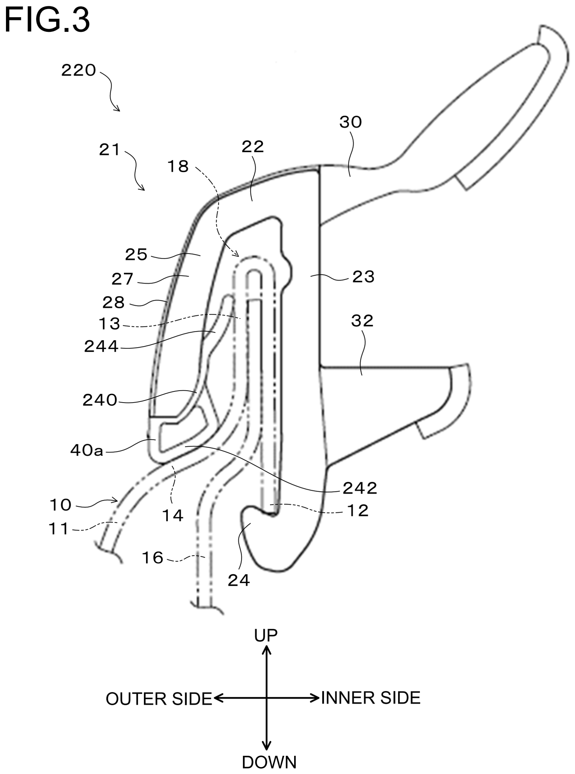

In the belt molding 120, the elastically contacting portion 140 has the first elastically contacting portion 142 and the second elastically contacting portion 144, but a configuration as illustrated in a modified belt molding 220 of FIG. 3 may be adopted. An elastically contacting portion 240 of the belt molding 220 is connected to the lower end of the vehicle outer side wall portion 25, and has a first elastically contacting portion 242 and a second elastically contacting portion 244. The first elastically contacting portion 242 has a shape similar to that of the first elastically contacting portion 142 of the belt molding 120. The second elastically contacting portion 244 is connected to the first elastically contacting portion 242, has a lip shape, extends from the vehicle outer side wall portion 25 toward the flange portion 18, and elastically contacts the door panel 10 (flange constituting portion 13 of the outer panel 11) in the vehicle width direction. The second elastically contacting portion 244 only needs to be connected to the vehicle outer side wall portion 25, and does not have to be directly connected to the first elastically contacting portion 242.

As described above, the modes for carrying out this disclosure have been described using the embodiments, but this disclosure is not limited to these embodiments in any way, and it goes without saying that this disclosure can be carried out in various modes without departing from the gist of this disclosure.

### [Industrial Applicability]

This disclosure is applicable to a manufacturing industry of belt moldings and the like.

## Claims

1. A belt molding (20, 120, 220) to be mounted to a flange portion (18) of a door panel (10), comprising:
a belt molding main body (21) including an upper wall portion (22) covering the flange portion (18) from an upper side, a vehicle inner side wall portion (23) extending downward from a vehicle inner side end portion of the upper wall portion (22), and a vehicle outer side wall portion (25) extending downward from a vehicle outer side end portion of the upper wall portion (22); and
an elastically contacting portion (40, 140, 240) being integrally connected to a lower end of the vehicle outer side wall portion (25), being molded into a continuous hollow shape, and elastically contacting the door panel (10).

2. The belt molding (20, 120, 220) according to Claim 1, wherein
a wall portion on the vehicle outer side of the elastically contacting portion (40, 140, 240) extends along an up-down direction in a state where the belt molding (20, 120, 220) is mounted to the flange portion (18).

3. The belt molding (20, 120, 220) according to Claim 1 or 2, wherein
the elastically contacting portion (40, 140, 240) extends from a lower side to the vehicle inner side with respect to the vehicle outer side wall portion (25), has a hollow shape, and elastically contacts the door panel (10) in an up-down direction and a vehicle width direction.

4. The belt molding (120) according to Claim 1 or 2, wherein
the elastically contacting portion (140) includes a first elastically contacting portion (140) being positioned below the vehicle outer side wall portion (25), having a hollow shape, and elastically contacting the door panel (10) in an up-down direction, and a second elastically contacting portion (140) being positioned on the vehicle inner side with respect to the vehicle outer side wall portion (25), having a hollow shape, and elastically contacting the door panel (10) in a vehicle width direction.

5. The belt molding (20, 120, 220) according to Claim 1 or 2, wherein
the belt molding (20, 120, 220) is molded of a co-extruded material including a hard resin material and a soft resin material, and
the elastically contacting portion (40, 140, 240) is molded of the soft resin material.
